(19) Europäisches Patentamt
European Patent Office
Office européen des brevets

(11) **EP 2 860 572 B1**

(12) **EUROPÄISCHE PATENTSCHRIFT**

(45) Veröffentlichungstag und Bekanntmachung des Hinweises auf die Patenterteilung:
**21.11.2018 Patentblatt 2018/47**

(51) Int Cl.:
*G02B 21/02* *(2006.01)*          *G02B 9/14* *(2006.01)*
*G02B 9/10* *(2006.01)*          *G02B 27/00* *(2006.01)*

(21) Anmeldenummer: **14178849.7**

(22) Anmeldetag: **29.07.2014**

(54) **Tubuslinseneinheit**

Tubular lens unit

Unité de lentille tubulaire

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.10.2013 DE 102013220266**
**12.04.2014 DE 102014005501**

(43) Veröffentlichungstag der Anmeldung:
**15.04.2015 Patentblatt 2015/16**

(73) Patentinhaber: **Carl Zeiss Microscopy GmbH**
**07745 Jena (DE)**

(72) Erfinder:
• **Shi, Renhu**
**37085 Göttingen (DE)**
• **Gonschor, Matthias**
**37130 Gleichen (DE)**

(74) Vertreter: **Müller, Silke**
**Carl Zeiss AG**
**Patentabteilung**
**Carl-Zeiss-Promenade 10**
**07745 Jena (DE)**

(56) Entgegenhaltungen:
**EP-A1- 2 202 556     JP-A- 2012 194 354**
**US-A- 2 713 808**

• **Anonymous: "Achromatic lens - Wikipedia, the free encyclopedia", , 15. Mai 2013 (2013-05-15), XP055165971, Gefunden im Internet: URL:http://web.archive.org/web/20130515110 617/http://en.wikipedia.org/wiki/Achromati c_lens [gefunden am 2015-01-29]**
• **Herbert Gross ET AL: "Handbook of Optical Systems: Vol. 3. Aberration Theory and Correction of Optical Systems; chapter 29 "Aberrations"" In: "Handbook of optical systems, Aberration theory and correction of optical systems", 31 December 2007 (2007-12-31), Wiley-VCH, Weinheim, DE, XP055399704, ISBN: 978-3-527-40379-0 vol. 8, pages 1-70,**

**EP 2 860 572 B1**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Tubuslinseneinheit für Mikroskope mit achromatisch korrigierender Wirkung zur Verwendung mit Objektiven unendlicher Bildweite und achromatischen Restfehlern.

Bekannt sind sogenannte (ICS-Systeme ("infinity color free correction systems"), die aus einem Objektiv mit chromatischen Restfehlern und unendlicher Bildweite sowie einer Tubuslinseneinheit mit chromatisch kompensierender Wirkung bestehen.

Mit einem derartigen System wird erreicht, dass ein Zwischenbild trotz der der chromatischen Restfehler des Objektivs ohne chromatische Aberrationen entsteht und eine weitestgehende farbtreue Wiedergabe mikroskopischer Objektdetails im gesamten Bildfeld erzielt wird.

Ein wesentlicher Nachteil der bekannten ICS-Systeme ist, dass der Abstand zwischen dem Objektiv und der Tubuslinseneinheit nur in engen Grenzen variabel ist, so dass diese Systeme an vorgegebene Tubuslinseneinheiten gebunden und insofern nur für die Anwendung in Geräten nutzbar sind, für die sie konzipiert wurden.

In WO2005/088378 wird eine Tubuslinseneinheit beschrieben, die bei Verwendung mit Objektiven unendlicher Bildweite und chromatischen Restfehlern eine chromatisch kompensierende Wirkung erzielt. Allerdings ist hier der unendliche Raum zwischen dem Mikroskopobjektiv und den Tubuslinsen nicht auskorrigiert ist, weil sich deren Farbfehler kompensieren. Als nachteilig erweist sich, dass der unendliche Raum nicht variierbar ist. Ferner entsteht bei einem Lateralversatz zwischen Objektiv und der Tubuslinseneinheit auf der optischen Achse ein Farbquerfehler.

Ferner wird in US 2010172029 eine auskorrigierte Tubuslinseneinheit beschrieben. Um den Farbfehler weitgehend zu eliminieren müssen sehr kostenintensive Gläser mit anormaler Dispersion verwendet werden. Nachteilig bei dieser Lösung ist, dass die Schwankung des Astigmatismus in Abhängigkeit vom unendlichen Raum nicht ausreichend beseitigt wird. Ferner erfolgt keine vollständige Kompensation der Farbquerfehler vom Objektiv und der Tubuslinseneinheit. Ausgehend von den Nachteilen der Lösungen des Standes der Technik liegt der Erfindung die Aufgabe zugrunde, eine Tubuslinseneinheit hinsichtlich der Kompaktheit und der Robustheit zu verbessern, wobei die Kompaktheit durch eine kurze Baulänge charakterisiert ist und die Robustheit die Minimierung der Änderungen von Aberrationen bei Kippfehlern und Lateralversatz der Linsen sowie die Höhenschwankung des Apertur- sowie Hauptstrahl beim Durchgang durch die Tubuslinseneinheit definiert.

Der Aperturstrahl ist dabei der Strahl, der vom axialen Objektpunkt ausgeht und den Rand der Apertur trifft, während der Hauptstrahl der Strahl ist, der vom höchsten Feldpunkt ausgeht und durch Mitte der Eintrittspupille geht.

Diese Aufgabe wird mit einer Tubuslinseneinheit der eingangs beschriebenen Art erfindungsgemäß mit den Merkmalen des Patentanspruchs 1 gelöst. Erfindungsgemäß besteht die Tubuslinseneinheit aus mindestens zwei Linsen mit den Eigenschaften

$$n_P < 1{,}50 \quad und \quad \nu_P < 71$$

$$n_N < 1{,}66 \quad und \quad \nu_N < 37$$

, wobei $n_P$ und $n_N$ für die Brechzahl bei einer Wellenlänge von 546 nm jeweils für eine positive und negative Linse und $\nu_P$ und $\nu_N$ für die Abbezahl bei der Wellenlänge von 546 nm jeweils für eine positive und negative Linse stehen und die Strahlenverläufe durch die Bedingungen

$$|\delta A| < 0{,}60 \quad und \quad |\delta B| < 0{,}30$$

charakterisiert sind, wobei $\delta A$ für die Schwankung der Aperturstrahl - Durchstoßhöhen für einen Durchmesser der Eintrittspupille von 17,55 mm beim Durchgang durch die Oberflächen der Linsen steht und $\delta B$ die Schwankung der Hauptstrahl - Durchstoßhöhen für einen Eingangswinkel w = 3,23 Grad beim Durchgang durch die Oberflächen der Linsen ist.

Vorteilhafterweise besteht die Tubuslinseneinheit aus einem Kittglied mit zwei Linsen, welches ausgehend vom unendlichen Raum durch eine Meniskuslinse mit negativer Brechkraft und eine bikonvexe Linse mit positiver Brechkraft charakterisiert ist.

Diese Variante ist bei einer Eintrittspupille an einer ersten Fläche, einem Durchmesser der Eintrittspupille von 17,55 mm, der Lage der Objektfläche im Unendlichen, einer Brennweite von 195,03 mm und einer Sehfeldzahl von 22 vorzugsweise gekennzeichnet durch folgende Funktionsdaten:

| Fläche F1-F5 | Radius r1-r5 | Dicke d1-d4 | $n_e$ | $v_e$ |
|---|---|---|---|---|
| 1 | Plan | 180,0 | | |
| 2 | 110,5964 | 5,870 | 1, 624 | 36,1 |
| 3 | 59,1367 | 13,300 | 1, 489 | 70,2 |
| 4 | -269,954 | 185,0 | | |
| 5 | Plan | | | |

wobei r der Radius in mm, d die Dicke der Linsen, beziehungsweise der Luftabstand in mm, $n_e$ die Brechzahl und $v_e$ die Abbezahl ist.

In einer anderen vorteilhaften Ausgestaltungsvariante besteht die Tubuslinseneinheit aus einer ausgehend vom unendlichen Raum angeordneten bikonvexen Linse (L1) mit positiver Brechkraft und einem Kittglied, bestehend aus einer Meniskuslinse (L2) mit negativer Brechkraft und einer Meniskuslinse (L3) mit positiver Brechkraft, wobei die Krümmungsradien aller Flächen der Meniskuslinsen (L2,L3) auf der Abbildungsseite liegen.

Diese Variante ist in einer ersten Ausführungsform bei einer Eintrittspupille an einer ersten Fläche, einem Durchmesser der Eintrittspupille von 17,55 mm, der Lage der Objektfläche im Unendlichen, einer Brennweite von 195,02 mm und einer Sehfeldzahl von 22 vorzugsweise gekennzeichnet durch folgende Funktionsdaten:

| Fläche F1-F7 | Radius r1-r7 | Dicke d1-d6 | $n_e$ | $v_e$ |
|---|---|---|---|---|
| 1 | Plan | 180,0 | | |
| 2 | 244,082 | 4,100 | 1,489 | 70,2 |
| 3 | -230,574 | 0,504 | | |
| 4 | 95,7844 | 2,580 | 1,652 | 33,6 |
| 5 | 58,2937 | 4,800 | 1,489 | 70,2 |
| 6 | 153,9989 | 185,0 | | |
| 7 | Plan | | | |

und in einer zweiten Ausführungsform bei einer Eintrittspupille an einer ersten Fläche, einem Durchmesser der Eintrittspupille von 17,55 mm, der Lage der Objektfläche im Unendlichen, einer Brennweite von 195,00 mm und einer Sehfeldzahl von 22 vorzugsweise gekennzeichnet durch folgende Funktionsdaten:

| Fläche F1-F7 | Radius r1-r7 | Dicke d1-d6 | $n_e$ | $v_e$ |
|---|---|---|---|---|
| 1 | Plan | 180.0 | | |
| 2 | 286.521 | 4.200 | 1.500 | 66,8 |
| 3 | -196.674 | 0.600 | | |
| 4 | 85.3597 | 3.980 | 1.652 | 33,6 |
| 5 | 52.7051 | 4.630 | 1.489 | 70,2 |
| 6 | 122.325 | 182.4 | | |
| 7 | Plan | | | |

wobei r der Radius in mm, d die Dicke der Linsen, beziehungsweise der Luftabstand in mm, $n_e$ die Brechzahl und $v_e$ die Abbezahl ist.

Mit der Achromasie im klassischen Sinne für Spektrallinien C'= 643,85 nm und F'= 479,99 nm lassen sich die farbquerfehler mit Objektiven nicht vollständig kompensieren. Die Schwerpunktverlagerung der Achromasie von C'-F' zu d-h liegt der zunehmenden Anwendungen von Kameras in der Mikroskopie zugrunde. Die Achromasie bei C'-F' bedeutet, dass die Fokuslagen bei der Spektrallinie C'(643,85 nm) und bei F' (479, 99 nm) gleich sind, während unter der Achromasie bei d-h zu verstehen ist, dass die Fokuslagen bei der Spektrallinie d = 587,56 nm und bei h = 404,65 nm) gleich sind.

C', F', d und h sind dabei bestimmte Spektrallinien vom Strahler, also bestimmte Wellenlängen.

CCD-Sensoren haben in der Regel einen breiteren Bereich der spektralen Empfindlichkeit. Die infraroten Strahlen werden durch IR-Blockfilter ausgefiltert. Im Bereich der kurzen Wellenlängen haben die CCD-Sensoren meistens eine höhere spektrale Empfindlichkeit als das menschliche Auge.

Die Tubuslinseneinheit realisiert eine Achromasie für die Spektrallinie d = 587,56 nm und für h = 404,65 nm, so dass die Farbfehler zusammen mit Objektiven im gesamten visuellen Bereich (VIS) vollständig kompensiert werden können.

Die Abbildungsfehler wie sphärische Aberration, Koma, Astigmatismus und Feldwölbung sind für einen Durchmesser der Eintrittspupille 17,55 mm weitgehend korrigiert, so dass man sie als "beugungsbegrenzt korrigiert" bezeichnen kann. Bei der Variation des unendlichen Raums von ± 35 mm vor der Tubuslinseneinheit ändern sich der Astigmatismus und der Farbquerfehler wenig.

Die erfindungsgemäße Tubuslinseneinheit soll nachfolgend anhand von zwei Ausführungsbeispielen näher erläutert werden. Dabei zeigen:

Figur 1: eine Darstellung der Tubuslinseneinheit mit drei Linsen,

Figur 2: eine Darstellung der Tubuslinseneinheit mit zwei Linsen,

Figur 3: eine Darstellung der Längsaberrationen in Abhängigkeit von der Eintrittspupille nach dem Ausführungsbeispiel nach Figur 1 (erste Variante),

Figur 4: Darstellungen der Farbquerfehler und Farblängsfehler nach dem Ausführungsbeispiel nach Figur 1 (erste Variante) und

Figur 5: Darstellungen der feldabhängigen Abbildungsfehler für Astigmatismus und Verzeichnung nach dem Ausführungsbeispiel nach Figur 1 (erste Variante).

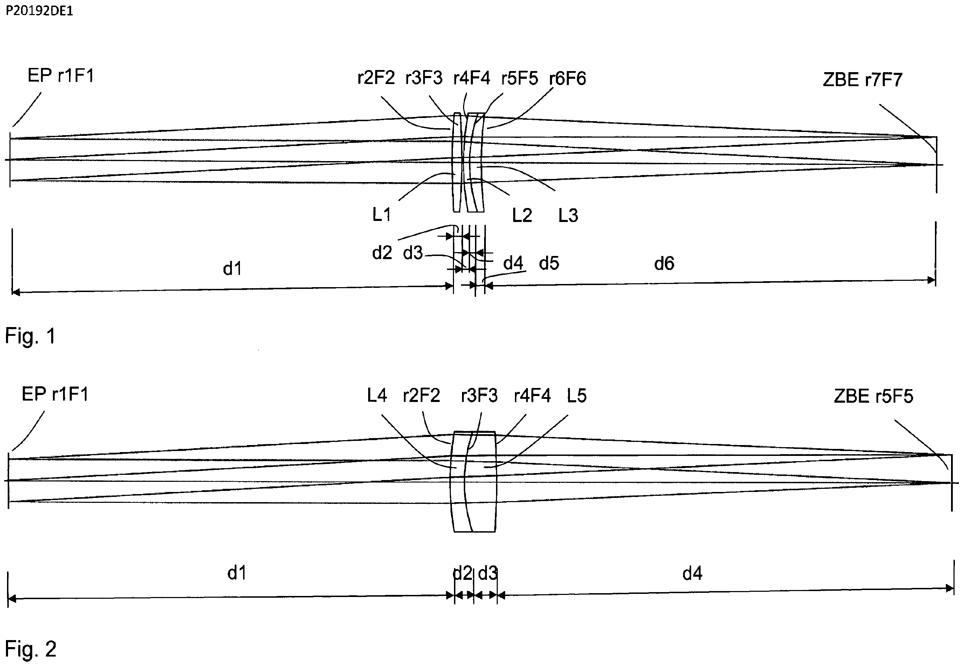

Figur 1 zeigt in einem ersten Ausführungsbeispiel die erfindungsgemäße Tubuslinseneinheit mit einer bikonvexen Einzellinse L1 und einem Kittglied, bestehend aus einer Meniskuslinse L2 mit negativer Brechkraft und einer Meniskuslinse L3 mit positiver Brechkraft. Ferner zeigt Figur 1 die Radien r1 bis r6, die Flächen F1,F2,F3,F4,F5,F6,F7, die Dicken d2,d4,d5 der Linsen L1,L2,L3, den Luftabstand d1 zwischen der Eintrittspupille EP und der Linse L1, den Luftabstand d3 zwischen der Linse L1 und L2 sowie den Luftabstand d6 zwischen der Linse L3 und der Zwischenbildebene ZBE. Die Krümmungszentren r4,r5,r6 aller Flächen F4,F5,F6 der Linsen L2 und L3 liegen auf der Abbildungsseite. Dieses Ausführungsbeispiel der Tubuslinseneinheit ist bei einer Eintrittspupille EP an der Fläche F1, einem Durchmesser der Eintrittspupille EP von 17,55 mm, der Lage der Objektfläche im Unendlichen, einer Brennweite f' von 195,02 mm und einer Sehfeldzahl von 22 in einer ersten Variante gekennzeichnet durch folgende Funktionsdaten:

| Fläche F1-F7 | Radius r1-r7 | Dicke d1-d6 | $n_e$ | $v_e$ |
|---|---|---|---|---|
| 1 | Plan | 180,0 | | |
| 2 | 244,082 | 4,100 | 1,489 | 70,2 |
| 3 | -230,574 | 0,504 | | |
| 4 | 95,7844 | 2,580 | 1, 652 | 33, 6 |
| 5 | 58,2937 | 4,800 | 1,489 | 70,2 |
| 6 | 153,9989 | 185,0 | | |
| 7 | Plan | | | |

und in einer zweiten Variante bei einer Eintrittspupille an einer ersten Fläche, einem Durchmesser der Eintrittspupille von 17,55 mm, der Lage der Objektfläche im Unendlichen, einer Brennweite von 195,00 mm und einer Sehfeldzahl von 22 vorzugsweise gekennzeichnet durch folgende Konstruktionsdaten:

| Fläche F1-F7 | Radius r1-r7 | Dicke d1-d6 | $n_e$ | $v_e$ |
|---|---|---|---|---|
| 1 | Plan | 180.0 | | |
| 2 | 286.521 | 4.200 | 1.500 | 66, 8 |
| 3 | -196.674 | 0.600 | | |
| 4 | 85.3597 | 3.980 | 1.652 | 33, 6 |
| 5 | 52.7051 | 4.630 | 1.489 | 70,2 |
| 6 | 122.325 | 182.4 | | |
| 7 | Plan | | | |

wobei die Radien r1 bis r7 in sowie die Dicken, beziehungsweise Luftabstände d1 bis d7, in mm angegeben sind und $n_e$ die Brechzahl sowie $v_e$ die Abbezahl ist.

Figur 2 zeigt in einem zweiten Ausführungsbeispiel die erfindungsgemäße Tubuslinseneinheit mit einem aus zwei Linsen L4,L5 bestehenden Kittglied, wobei ausgehend vom unendlichen Raum die Linse L4 als Meniskuslinse und die Linse L5 als bikonvexe Linse mit negativer Brechkraft ausgebildet ist. Ferner zeigt Figur 2 die Radien r1 bis r5, die Dicken d2, d3, der Linsen L4,L5, die Flächen F1,F2,F3,F4,F5, den Luftabstand d1 zwischen der Eintrittspupille EP und der Linse L4 sowie den Luftabstand d4 zwischen der Linse L5 und der Zwischenbildebene ZBE.

Dieses Ausführungsbeispiel der Tubuslinseneinheit ist bei einer Eintrittspupille EP an einer ersten Fläche 1, einem Durchmesser der Eintrittspupille EP von 17,55 mm, der Lage der Objektfläche im Unendlichen, einer Brennweite f' von 195,03 mm und einer Sehfeldzahl von 22 gekennzeichnet durch folgende Funktionsdaten:

| Fläche F1-F5 | Radius r1-r5 | Dicke d1-d4 | $n_e$ | $v_e$ |
|---|---|---|---|---|
| 1 | Plan | 180,0 | | |
| 2 | 110,5964 | 5,870 | 1,624 | 36,1 |
| 3 | 59,1367 | 13,300 | 1,489 | 70,2 |
| 4 | -269,954 | 185,0 | | |
| 5 | Plan | | | |

wobei die Radien r1 bis r5 in sowie die Dicken, beziehungsweise Luftabstände d1 bis d4, in mm angegeben sind und $n_e$ die Brechzahl sowie $v_e$ die Abbezahl ist.

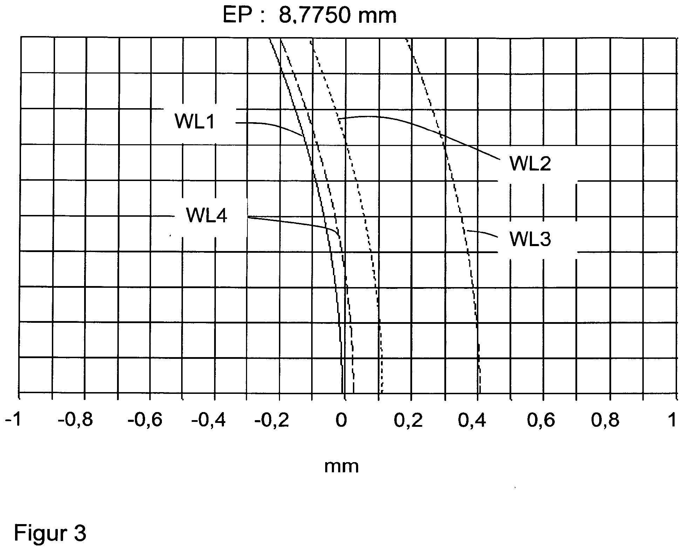

Figur 3 zeigt Längsaberrationen der Tubuslinseneinheit nach dem ersten Ausführungsbeispiel (Figur 1, erste Variante) in Abhängigkeit von der Eintrittspupille EP. Der maximale Radius der Eintrittspupille EP ist dabei 8,7750 mm. Die Längsaberrationen sind für die Wellenlängen WL1 = 0,480 $\mu$m, WL2 = 0,546 $\mu$m, WL3 = 0,644 $\mu$m und WL4 = 0,436 $\mu$m dargestellt, wobei in der Vertikalkoordinate ein Teilstrich 0,8775 mm entspricht.

Aus dem Verlauf der Kurven lässt sich erkennen, dass sphärische Aberrationen nahezu auskorrigiert sind. Ferner ist ersichtlich, dass eine Achromasie, auch wenn im klassischen Sinne nicht für die Wellenlängen WL1 und W12 festgelegt, hier entsteht.

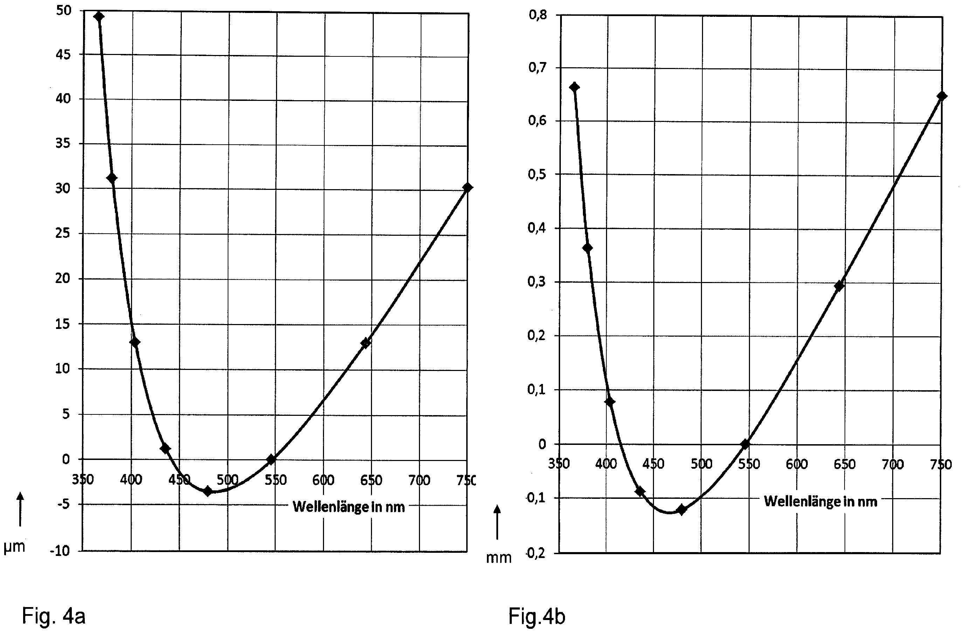

Die Figuren 4 zeigen Farbquerfehler für eine Bildhöhe von +11 mm (Figur 4a) und Farblängsfehler bei einem Durchmesser der Eintrittspupille von 17,55 mm (Figur 4b) in Abhängigkeit von verschiedenen Wellenlängen in nm nach dem ersten Ausführungsbeispiel (Figur 1, erste Variante).

Die Fokuslagen für die Wellenlängen h (404,65 nm) und d (587,56 nm) sind nahezu gleich (Figur 4b), was bedeutet, dass für die Wellenlängen h und d eine Achromasie realisiert wird.

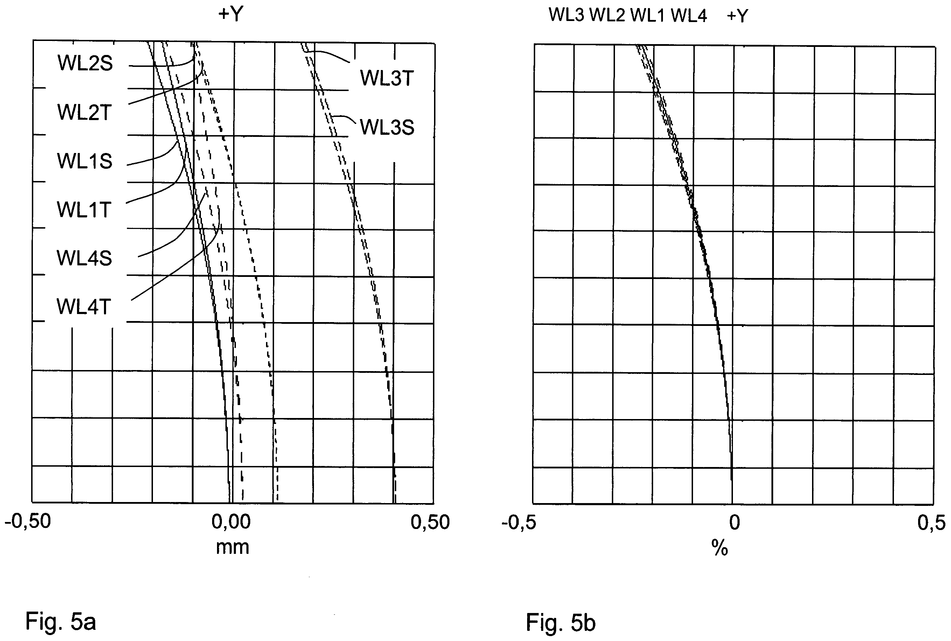

In den Figuren 5 werden feldabhängige Abbildungsfehler für den Astigmatismus (Figur 5a) und die Verzeichnung (Figur 5b) bei vier verschiedenen Wellenlängen WL1 = 0,480 $\mu$m, WL2 = 0,546 $\mu$m WL3 = 0,644 $\mu$m und WL4 = 0,436 $\mu$m in Abhängigkeit von der Bildhöhe Y (maximal 11 mm) nach dem ersten Ausführungsbeispiel (Figur 1, erste Variante) dargestellt, wobei S die sagittale Bildschale und T die tangentiale Bildschale definiert.

Für die Eintrittspupille EP mit einem Durchmesser von 17,55 mm beträgt die Schärfentiefe 0,27 mm im Bildraum. Der Abstand am Feldrand zwischen der sagittalen Bildschale S und der tangentialen Bildschale T (Figur 5a) ist bei allen angegebenen Wellenlängen kleiner 0,05 mm, das heißt er ist etwa ein Sechstel der Schärfentiefe. Der Astigmatismus ist damit nahezu auskorrigiert. Die Verzeichnung (Figur 5b) ist am Feldrand -0,24 % und kann zusammen mit den Objektiven aus korrigiert werden.

**Bezugszeichenliste**

| | |
|---|---|
| L1,L2,L3,L4,L5 | Linsen |
| r1,r2,r3,r4,r5,r6,r7 | Radien |
| d1,d2,d3,d4,d5,d6 | Dicken/Luftabstände |
| F1,F2,F3,F4,F5,F6,F7 | Flächen |
| EP | Eintrittspupille |
| f' | Brennweite |
| ZBE | Zwischenbildebene |
| $n_e$ | Brechzahl |
| $v_e$ | Abbezahl |
| WL1,WL2,WL3,WL4 | Wellenlänge |
| S | sagittale Bildschale |
| T | tangentiale Bildschale |
| Y | Bildhöhe |

**Patentansprüche**

1. Tubuslinseneinheit für Mikroskope mit achromatisch korrigierender Wirkung zur Verwendung mit Objektiven unendlicher Bildweite und achromatischen Restfehlern, bestehend aus mindestens zwei Linsen (L1,L2,L3,L4,L5) mit den Eigenschaften

$$n_P < 1,50 \quad und \quad v_P < 71$$

$$n_N < 1,66 \quad und \quad v_N < 37$$

wobei $n_P$ und $n_N$ für die Brechzahl ($n_e$) bei einer Wellenlänge von 546 nm jeweils für eine positive und negative Linse und $v_P$ und $v_N$ für die Abbezahl ($v_e$) bei einer Wellenlänge von 546 nm (WL2) jeweils für eine positive und negative Linse stehen, **dadurch gekennzeichnet, dass** bei einer Eintrittspupille (EP) mit einem Durchmesser von 17,55 mm an einer ersten Fläche (F1) und der Lage einer Objektfläche im Unendlichen und einer Sehfeldzahl von 22,

    a. in einer ersten Ausführung die Tubuslinseneinheit mit einer Brennweite (f') von 195,03 mm durch ein Kittglied mit zwei Linsen (L4, L5) gebildet ist, welches ausgehend von einem Zwischenraum zwischen einem Objektiv und der Tubuslinseneinheit durch eine Meniskuslinse (L4) mit negativer Brechkraft und eine bikonvexe Linse (L5) mit positiver Brechkraft gebildet ist, mit folgenden Funktionsdaten:

| Fläche F1-F5 | Radius r1-r5 | Dicke d1-d4 | $n_e$ | $v_e$ |
|---|---|---|---|---|
| 1 | Plan | 180,0 | | |
| 2 | 110,5964 | 5,870 | 1,624 | 36,1 |
| 3 | 59,1367 | 13,300 | 1,489 | 70,2 |
| 4 | -269, 954 | 185,0 | | |
| 5 | Plan, | | | |

oder

    b. in einer zweiten Ausführung die Tubuslinseneinheit aus einer ausgehend vom Zwischenraum zwischen einem Objektiv und den Tubuslinsen angeordneten bikonvexen Linse (L1) mit positiver Brechkraft und einem Kittglied gebildet wird, das Kittglied bestehend aus einer Meniskuslinse (L2) mit negativer Brechkraft und einer Meniskuslinse (L3) mit positiver Brechkraft, wobei die Krümmungszentren aller Flächen (F4,F5,F6) der Meniskuslinsen (L2,L3) auf der Abbildungsseite liegen,

        i. wobei die Tubuslinseneinheit mit einer Brennweite (f') von 195,02 mm folgende Funktionsdaten aufweist:

| Fläche F1-F7 | Radius r1-r7 | Dicke d1-d6 | $n_e$ | $v_e$ |
|---|---|---|---|---|
| 1 | Plan | 180,0 | | |
| 2 | 244,082 | 4,100 | 1,489 | 70,2 |
| 3 | -230,574 | 0,504 | | |
| 4 | 95,7844 | 2,580 | 1,652 | 33,6 |
| 5 | 58,2937 | 4,800 | 1,489 | 70,2 |
| 6 | 153, 9989 | 185,0 | | |
| 7 | Plan, | | | |

        ii. oder wobei die Tubuslinseneinheit mit einer Brennweite (f') von 195,00 mm folgende Funktionsdaten aufweist:

| Fläche F1-F7 | Radius r1-r7 | Dicke d1-d6 | $n_e$ | $v_e$ |
|---|---|---|---|---|
| 1 | Plan | 180.0 | | |
| 2 | 286.521 | 4.200 | 1.500 | 66,8 |
| 3 | -196.674 | 0.600 | | |

(fortgesetzt)

| Fläche F1-F7 | Radius r1-r7 | Dicke d1-d6 | $n_e$ | $v_e$ |
|---|---|---|---|---|
| 4 | 85.3597 | 3.980 | 1.652 | 33,6 |
| 5 | 52.7051 | 4.630 | 1.489 | 70,2 |
| 6 | 122.325 | 182.4 | | |
| 7 | Plan, | | | |

wobei F1,...F7 Flächen, r1,...,r7 Radien in mm an diesen Flächen, d1,...,d7 Linsendicken bzw. Luftabstände in mm bezeichnet,

so dass beim Durchgang durch die Oberflächen der Linsen (L1, L2, L3, L4, L5) der Betrag der Schwankung der Durchstoßhöhe des Aperturstrahls $|\delta A| < 0,60$ ist und für einen Eingangswinkel w = 3,23° der Betrag der Schwankung der Durchstoßhöhe des Hauptstrahls $|\delta B| < 0,3$ ist,

und so dass eine Achromasie für die Spektrallinien d = 587,56 nm und h = 404,65 nm realisiert ist.

**Claims**

1. Tube lens element unit for microscopes having an achromatically corrective effect for use with objectives of infinite image distance and residual achromatic aberrations, consisting of at least two lens elements (L1, L2, L3, L4, L5) having the properties

$$n_P < 1.50 \ and \ v_P < 71$$

$$n_N < 1.66 \ and \ v_N < 37$$

wherein $n_P$ and $n_N$ represent the refractive index ($n_e$) at a wavelength of 546 nm in each case for a positive and negative lens element, and $v_P$ and $v_N$ represent the Abbe number ($v_e$) at a wavelength of 546 nm (WL2) in each case for a positive and negative lens element, **characterized in that**, with an entrance pupil (EP) having a diameter of 17.55 mm on a first surface (F1) and the location of an object surface at infinity and a field number of 22,

a. in a first embodiment, the tube lens element unit having a focal length (f') of 195.03 mm is formed by a cemented element having two lens elements (L4, L5), which is formed starting from an intermediate space between an objective and the tube lens element unit by a meniscus lens element (L4) having a negative refractive power and a biconvex lens element (L5) having a positive refractive power, having the following functional data:

| Surface F1-F5 | Radius r1-r5 | Thickness d1-d4 | $n_e$ | $v_e$ |
|---|---|---|---|---|
| 1 | plane | 180.0 | | |
| 2 | 110.5964 | 5.870 | 1.624 | 36.1 |
| 3 | 59.1367 | 13.300 | 1.489 | 70.2 |
| 4 | -269.954 | 185.0 | | |
| 5 | plane | | | |

or

b. in a second embodiment, the tube lens element unit is formed from a biconvex lens element (L1) having a positive refractive power, arranged starting from an intermediate space between an objective and the tube lens elements, and a cemented element, with the cemented element consisting of a meniscus lens element (L2) having a negative refractive power and a meniscus lens element (L3) having a positive refractive power, wherein the centres of curvature of all surfaces (F4, F5, F6) of the meniscus lens elements (L2, L3) are on the imaging side,

i. wherein the tube lens element unit having a focal length (f') of 195.02 mm has the following functional data:

| Surface F1-F7 | Radius r1-r7 | Thickness d1-d6 | $n_e$ | $v_e$ |
|---|---|---|---|---|
| 1 | plane | 180.0 | | |
| 2 | 244.082 | 4.100 | 1.489 | 70.2 |
| 3 | -230.574 | 0.504 | | |
| 4 | 95.7844 | 2.580 | 1.652 | 33.6 |
| 5 | 58.2937 | 4.800 | 1.489 | 70.2 |
| 6 | 153.9989 | 185.0 | | |
| 7 | plane | | | |

ii. or wherein the tube lens element unit having a focal length (f') of 195.00 mm has the following functional data:

| Surface F1-F7 | Radius r1-r7 | Thickness d1-d6 | $n_e$ | $v_e$ |
|---|---|---|---|---|
| 1 | plane | 180.0 | | |
| 2 | 286.521 | 4.200 | 1.500 | 66.8 |
| 3 | -196.674 | 0.600 | | |
| 4 | 85.3597 | 3.980 | 1.652 | 33.6 |
| 5 | 52.7051 | 4.630 | 1.489 | 70.2 |
| 6 | 122.325 | 182.4 | | |
| 7 | plane | | | |

wherein F1,...F7 are surfaces, r1,..., r7 are radii in mm on said surfaces, d1,..., d7 are lens element thicknesses or air distances in mm,

such that, upon passage through the surfaces of the lens elements (L1, L2, L3, L4, L5), the absolute value of the variation of the intersection height of the aperture ray $|\delta A| < 0.60$ and for an angle of incidence w = 3.23° the absolute value of the variation of the intersection height of the chief ray $|\delta B| < 0.3$, and such that achromatism for the spectral lines d = 587.56 nm and h = 404.65 nm is realized.

## Revendications

1. Unité de lentille tubulaire pour microscope à effet de correction achromatique, destinée à une utilisation avec des objectifs à distance d'image infinie et à erreurs résiduelles achromatiques, composée d'au moins deux lentilles (L1, L2, L3, L4, L5) ayant les propriétés suivantes :

$$n_P < 1{,}50 \ et \ v_P < 71$$

$$n_N < 1{,}66 \ et \ v_N < 37,$$

sachant que $n_P$ et $n_N$ représentent l'indice de réfraction ($n_e$) à une longueur d'onde de 546 nm respectivement pour une lentille positive et négative et $v_P$ et $v_N$ le nombre d'Abbe ($v_e$) à une longueur d'onde de 546 nm (WL2) respectivement pour une lentille positive et négative, **caractérisée en ce que**, dans le cas d'une pupille d'entrée (EP) d'un diamètre de 17,55 mm au niveau d'une première surface (F1) et de la position d'une surface d'objet dans l'infini et d'un indice de champ visuel de 22,

a. dans un premier modèle, l'unité de lentille tubulaire présentant une distance focale (f') 195,03 mm est constituée par un élément collé avec deux lentilles (L4, L5) qui, en partant d'un intervalle entre un objectif et l'unité de lentilles tubulaires, est composé d'une lentille de ménisque (L4) à puissance optique négative et d'une lentille biconvexe (L5) à puissance optique positive et présentant les données fonctionnelles suivantes :

| Surface F1-F5 | Rayon r1-r5 | Épaisseur d1-d4 | $n_e$ | $v_e$ |
|---|---|---|---|---|
| 1 | Plan | 180,0 | | |

(suite)

| Surface F1-F5 | Rayon r1-r5 | Épaisseur d1-d4 | $n_e$ | $v_e$ |
|---|---|---|---|---|
| | 110,5964 | | | 36,1 |
| 2 | | 5,870 | 1,624 | 70,2 |
| 3 | 59,1367 | 13,300 | 1,489 | |
| 4 | -269,954 | 185, 0 | | |
| 5 | Plan | | | |

ou

b. dans un second modèle, l'unité de lentille tubulaire est constituée d'une lentille biconvexe (L1) disposée en partant de l'intervalle entre un objectif et les lentilles tubulaires à puissance optique positive et un élément collé, l'élément collé étant composé d'une lentille de ménisque (L2) à puissance optique négative et d'une lentille de ménisque (L3) à puissance optique positive, les centres de courbure de toutes les surfaces (F4, F5, F6) des lentilles de ménisque (L2, L3) se situant sur le côté de représentation,

 i. l'unité de lentille tubulaire à une distance focale (f') de 295,02 mm présentant les données fonctionnelles suivantes :

| Surface F1-F7 | Rayon r1-r7 | Épaisseur d1-d6 | $n_e$ | Ve |
|---|---|---|---|---|
| 1 | Plan | 180,0 | | |
| 2 | 244,082 | 4,100 | 1,489 | 70,2 |
| 3 | -230,574 | 0,504 | | |
| 4 | 95,7844 | 2,580 | 1,652 | 33, 6 |
| 5 | 58,2937 | 4,800 | 1, 489 | 70,2 |
| 6 | 153, 9989 | 185, 0 | | |
| 7 | Plan, | | | |

 ii. ou l'unité de lentille tubulaire à une distance focale (f') de 195,00 mm présentant les données fonctionnelles suivantes :

| Surface F1-F7 | Rayon r1-r7 | Épaisseur d1-d6 | $n_e$ | $V_e$ |
|---|---|---|---|---|
| 1 | Plan | 180.0 | | |
| 2 | 286.521 | 4.200 | 1.500 | 66, 8 |
| 3 | -196.674 | 0.600 | | |
| 4 | 85.3597 | 3.980 | 1.652 | 33, 6 |
| 5 | 52.7051 | 4.630 | 1.489 | 70,2 |
| 6 | 122.325 | 182.4 | | |
| 7 | Plan, | | | |

 sachant que F1, ...F7 désigne des surfaces, r1, ..., r7 des rayons en mm au niveau de ces surfaces, d1, ..., d7 des épaisseurs de lentilles ou des espaces d'air en mm,

 de sorte que, lors du passage à travers la surface des lentilles (L1, L2, L3, L4, L5), l'ampleur de la variation de la hauteur de percée du rayon d'ouverture $|\delta A|$ est < 0,60 et, pour un angle d'entrée w = 3,23°, l'ampleur de la variation de la hauteur de percée du rayon principal $|\delta B|$ est < 0,3 et qu'une achromasie est ainsi réalisée par les lignes spectrales d = 587,56 nm et h = 404,65 nm.

P20192DE1

Fig. 1

Fig. 2

EP : 8,7750 mm

Figur 3

Fig.4b

Fig. 4a

WL3 WL2 WL1 WL4   +Y

-0,5                    0                    0,5
                       %

Fig. 5b

+Y

WL3T
WL3S

WL2S
WL2T
WL1S
WL1T
WL4S
WL4T

-0,50              0,00              0,50
                   mm

Fig. 5a

**IN DER BESCHREIBUNG AUFGEFÜHRTE DOKUMENTE**

**In der Beschreibung aufgeführte Patentdokumente**

- WO 2005088378 A
- US 2010172029 A